(19) Europäisches Patentamt
European Patent Office
Office européen des brevets

(11) Veröffentlichungsnummer: **0 260 689 B1**

(12) # EUROPÄISCHE PATENTSCHRIFT

(45) Veröffentlichungstag der Patentschrift: **03.02.93**

(51) Int. Cl.[5]: **C09B 57/06**, G11B 7/24

(21) Anmeldenummer: **87113596.8**

(22) Anmeldetag: **17.09.87**

(54) **Naphtolactamquadratsäurefarbstoffe und diese Farbstoffe enthaltende optische Aufzeichnungsmedien.**

(30) Priorität: **19.09.86 DE 3631843**

(43) Veröffentlichungstag der Anmeldung:
**23.03.88 Patentblatt 88/12**

(45) Bekanntmachung des Hinweises auf die Patenterteilung:
**03.02.93 Patentblatt 93/05**

(84) Benannte Vertragsstaaten:
**CH DE FR GB IT LI NL**

(56) Entgegenhaltungen:
**EP-A- 0 214 847**
**US-A- 4 175 956**

(73) Patentinhaber: **BASF Aktiengesellschaft**
**Carl-Bosch-Strasse 38**
**W-6700 Ludwigshafen(DE)**

(72) Erfinder: **Dust, Matthias, Dr.**
**Bismarckplatz 15-17**
**W-6800 Mannheim 1(DE)**
Erfinder: **Neumann, Peter, Dr.**
**Franz-Schubert-Strasse 1**
**W-6908 Wiesloch(DE)**
Erfinder: **Hauser, Peter, Dr.**
**Saarstrasse 2**
**W-6703 Limburgerhof(DE)**
Erfinder: **Wagenblast, Gerhard, Dr.**
**Hanns-Fay-Strasse 3**
**W-6710 Frankenthal(DE)**
Erfinder: **Benthack-Thoms, Heidi, Dr.**
**Wilhelm-Busch-Strasse 18**
**W-6703 Limburgerhof(DE)**
Erfinder: **Barzynski, Helmut, Dr.**
**An der Ameisenhalde 49**
**W-6702 Bad Duerkheim(DE)**
Erfinder: **Schomann, Klaus Dieter, Dr.**
**Kopernikusstrasse 47**
**W-6700 Ludwigshafen(DE)**
Erfinder: **Kuppelmaier, Harald, Dr.**
**Kuehler Grund 30 a**
**W-6900 Heidelberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Optische Aufzeichnungsmaterialien, die mit Strahlen hoher Energiedichte z.B. Laserlicht, lokal begrenzte Zustandsänderungen erfahren, sind bekannt. Diese thermisch ausgelösten Zustandsänderungen sind mit Änderungen der optischen Eigenschaften verbunden und werden zur Informations- und Datenaufzeichnung ausgenutzt.

Als Aufzeichnungsmaterialien für diese Art der Informationsspeicherung werden dünne Schichten aus Metallen bzw. Legierungen verwendet. Diese Materialien weisen jedoch eine geringe Haltbarkeit auf, da sie gegenüber Oxidation und Feuchtigkeit empfindlich sind.

Für die Anwendung als Speichermedium ist es erforderlich, daß sich die amorphen Schichten über lange Zeiträume nicht verändern. Alterungsprozesse wie z.B. Kristallisation oder Ausbleichen durch Licht und Wärme, wodurch die Morphologie der Speicherschicht verändert wird, treten bei dünnen, aufgedampften Schichten relativ häufig auf.

Weiterhin sind optische Speichersysteme bekannt, die als absorbierende Verbindungen Oxazine (JP-A 132 231/1983), Cyaninfarbstoffe (JP-A 112 790/1983 und 125 246/1983), Phthalocyaninverbindungen (EP-A 84 729, US-A 4 241 355, JP-A 56 892/1983) und Naphthochinon-1,4-Verbindungen, die Substituenten mit Donorwirkung tragen (JP-A 112 793/1983), enthalten. Diese Speicher können mit einem He-Ne-Laser (633 nm) beschrieben werden.

Weiterhin sind eine Vielzahl von Aufzeichnungsmedien für den Betrieb mit Halbleiterinjektionslasern beschrieben worden. Als organische IR-Farbstoffe wurden hier insbesondere Phthalocyaninverbindungen, Methinfarbstoffe und Ouadratsäurederivate verwendet.

Aufgabe der Erfindung war es, neue Naphtholactamquadratsäurefarbstoffe bereitzustellen, die zur Herstellung von optischen Aufzeichnungsmedien geeignet sind.

Die Erfindung betrifft Naphtholactamquadratsäurefarbstoffe der Formel

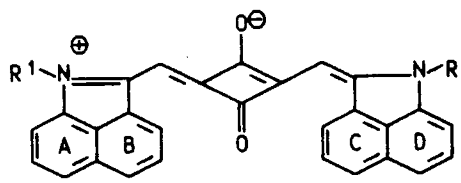

(I),

in der $R^1$ und $R^2$ unabhängig voneinander gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiertes $C_3$- bis $C_{22}$-Alkyl, wobei die Alkylkette durch Sauerstoffatome unterbrochen sein kann, $C_1$- bis $C_4$-Aralkyl, gegebenenfalls durch $C_1$- bis $C_4$-Alkyl oder Halogen substituiertes $C_5$- bis $C_7$-Cycloalkyl oder gegebenenfalls durch $C_1$- bis $C_4$-Alkyl, $C_1$- bis $C_4$-Alkoxy, Halogen oder $C_1$- bis $C_4$-Dialkylamino substituiertes Phenyl sind und die Ringe A, B, C und D gegebenenfalls durch $C_1$- bis $C_{22}$-Alkyl, das gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiert ist und dessen Alkylkette durch Sauerstoffatome unterbrochen sein kann, Phenyl, $C_1$- bis $C_{22}$-Alkoxy, $C_1$- bis $C_{20}$-Alkylthio, Halogen, Nitro, Cyano, $C_1$- bis $C_4$-Mono- oder -Dialkylamino, 1-Azacycloalkyl, $C_1$- bis $C_4$-Alkylsulfonyl, $C_1$- bis $C_4$-Alkoxysulfonyl, Phenylsulfonyl, $C_1$- bis $C_4$-Alkylphenylsulfonyl, Hydroxysulfonyl, Anilino, $C_1$- bis $C_4$-Alkylanilino, $C_1$- bis $C_4$-Alkanoyl, $C_1$- bis $C_4$-Alkanoylamino, $C_1$- bis $C_4$-Alkoxycarbonyl, $C_1$- bis $C_4$-Alkoxycarbonylamino, Carbamoyl, $C_1$- bis $C_4$-N-Mono- oder $C_1$- bis $C_4$-N,N-Dialkylcarbamoyl, Sulfamoyl, $C_1$- bis $C_4$-N-Mono- oder N,N-$C_1$- bis $C_4$-Dialkylsulfamoyl, Ureido, durch $C_1$- bis $C_4$-Alkyl substituiertes Ureido, Phenoxy, Phenylthio oder den Rest

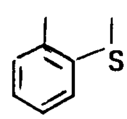

substituiert und/oder benzoanelliert sind.

Alle in den oben genannten Resten auftretenden Alkylgruppen können sowohl geradkettig als auch verzweigt sein.

Für $R^1$ und $R^2$ sind als $C_3$- bis $C_{22}$-Alkyl, das gegebenenfalls durch Phenyl, Halogen, $C_1$-$C_4$-Alkanoyl,

Carboxyl, $C_1$-$C_4$-Alkanoylamino, $C_1$-$C_4$-Alkoxycarbonyl, $C_1$-$C_4$-Alkoxycarbonylamino oder $C_1$-$C_4$-Alkylanilino substituiert ist und wobei die Alkylkette durch Sauerstoffatome unterbrochen sein kann, im einzelnen z.B. zu nennen: n-Propyl, Isopropyl, n-Butyl, Isobutyl, tert-Butyl, n-Pentyl, 2-Methylbutyl, n-Hexyl, 2-Methylpentyl, n-Heptyl, n-Octyl, 2-Ethylhexyl, Isooctyl, Nonyl, Isononyl, Decyl, Isodecyl, Dodecyl, Undec-10-en-yl-1, 3,5,5,7-Tetramethylnonyl, Isotridecyl, Pentadecyl, Hexadecyl, Heptadecyl, Octadecyl, Nonadecyl, Eicosyl, Docosyl, (die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann, Enzyklopädie der Technischen Chemie, 4. Auflage, Band 7, Seiten 216 und 217 sowie Band 11, Seiten 435 und 436)), Heptafluorpropyl, 2-Methoxyethyl, 2-Ethoxypropyl, 3-Ethoxypropyl, 3,6-Dioxaheptyl, 3,6-Dioxaoctyl, 3,6,9-Trioxadecyl, Propan-2on-1-yl, Butan-3-on-1-yl, 2-Ethylpentan-3-on-1-yl, 2-Carboxyethyl, 3-Carboxypropyl, 4-Carboxybutyl, 5-Carboxypentyl, 4-Carboxy-3-oxabutyl, 3-Methoxycarbonylpropyl .

Als $C_1$- bis $C_4$-Aralkyl sind z.B. Benzyl, 2-Phenylethyl und 2- und 3-Phenylpropyl zu nennen.

Als $C_5$- bis $C_7$-Cycloalkyl, das gegebenenfalls durch $C_1$- bis $C_4$-Alkyl oder Halogen substituiert ist, sind für $R^1$ und $R^2$ zu nennen: Cyclopentyl, Cyclohexyl, Cycloheptyl, 3-Methylcyclopentyl, 4-Ethylcyclohexyl oder 2,3-Dichlorcyclohexyl.

Als gegebenenfalls substituiertes Phenyl kommt Phenyl und durch $C_1$-$C_4$-Alkyl, $C_1$-$C_4$-Alkoxy, Halogen oder $C_1$-$C_4$-Dialkylamino substituiertes Phenyl in Betracht, z.B. 4-Methylphenyl, 4-Isopropylphenyl, 4-Methoxyphenyl, 2,4-Dimethoxyphenyl, 2-Chlorphenyl, 4-Bromphenyl oder 4-Dimethylaminophenyl.

Die Ringe A, B, C und D in der Formel I können unsubstituiert oder z.B. durch $C_1$-$C_{22}$-Alkyl, das gegebenenfalls durch Phenyl, Halogen, $C_1$-$C_4$-Alkanoyl, Carboxyl, $C_1$-$C_4$-Alkanoylamino, $C_1$-$C_4$-Alkoxycarbonyl, $C_1$-$C_4$-Alkoxycarbonylamino oder $C_1$-$C_4$-Alkylanilino substituiert ist und dessen Alkylkette durch Sauerstoffatome unterbrochen sein kann, durch Phenyl, $C_1$-$C_{22}$-Alkoxy, $C_1$-$C_{20}$-Alkylthio, Halogen, Nitro, Cyano, $C_1$-$C_4$-Mono- oder Dialkylamino, 1-Azacycloalkyl, $C_1$-$C_4$-Alkylsulfonyl, $C_1$-$C_4$-Alkoxysulfonyl, Phenylsulfonyl, $C_1$-$C_4$-Alkylphenylsulfonyl, Hydroxysulfonyl, Anilino, $C_1$-$C_4$-Alkylanilino, $C_1$-$C_4$-Alkanoyl, $C_1$-$C_4$-Alkanoylamino, $C_1$-$C_4$-Alkoxycarbonyl, $C_1$-$C_4$-Alkoxycarbonylamino, Carbamoyl, $C_1$- bis $C_4$-N-Mono-oder $C_1$- bis $C_4$-N,N-Dialkylcarbamoyl, Sulfamoyl, $C_1$-$C_4$-N-Mono-oder N,N-$C_1$-bis $C_4$-Dialkylsulfamoyl, Ureido, durch $C_1$-$C_4$-Alkyl substituiertes Ureido, Phenoxy, Phenylthio oder den Rest

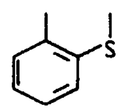

substituiert oder benzoanelliert sein.

1-Azacycloalkylreste sind z.B. fünf- bis siebengliedrige gesättigte Stickstoffheterocyclen, die über Stickstoff gebunden sind und noch weitere Heteroatome enthalten können. Im einzelnen seien beispielsweise

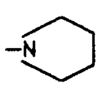 , 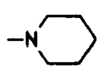 , 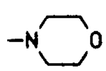 , 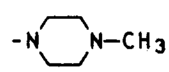 ,

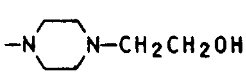 oder 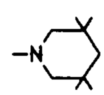

genannt.

Beispielsweise sind folgende Substitutionsmuster am Naphtholactamsystem zu nennen:

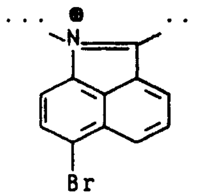, 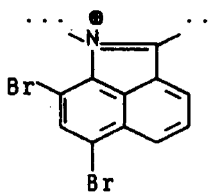, 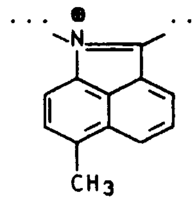, 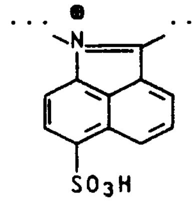, 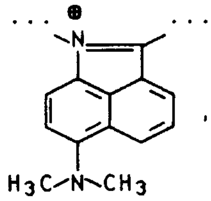,

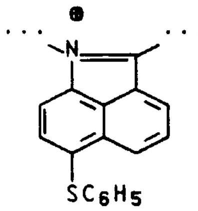, 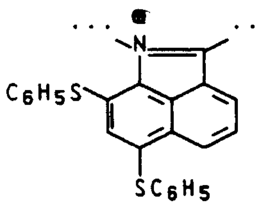, 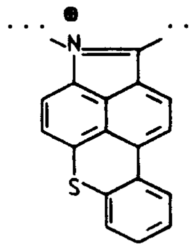, 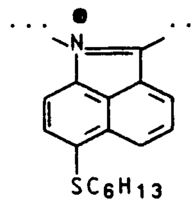,

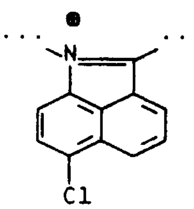, 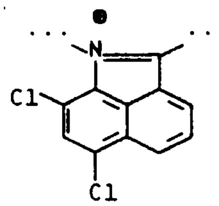, 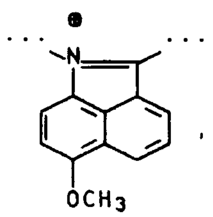, 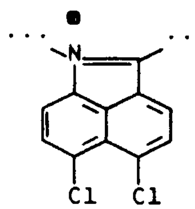, 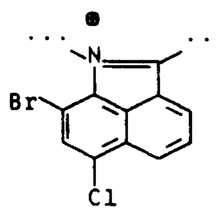,

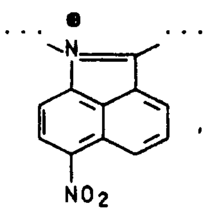, 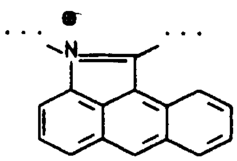, 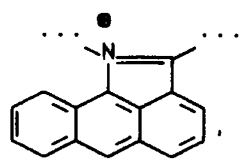, 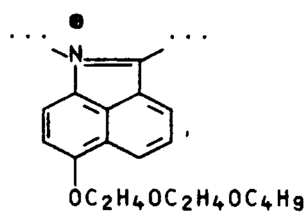,

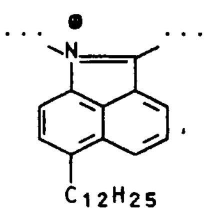, 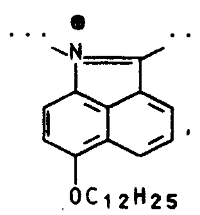, 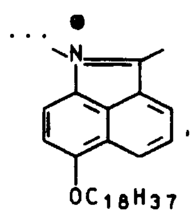, 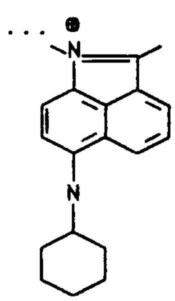.

Bevorzugt sind Naphtholactamquadratsäurefarbstoffe (I), in denen $R^1$ und $R^2$ $C_6$- bis $C_{22}$-Alkyl, insbesondere $C_{12}$- bis $C_{22}$-Alkyl, 2-Methoxyethyl, 2,3,3-Trimethyl-4-hydroxybutyl, 2-Ethoxyethyl, 2-n-Butoxyethyl, 2-Benzyloxylethyl, 2-Hydroxyethyl, 8-Hydroxyoctyl, 3,6-Dioxaheptyl, 3,6-Dioxaoctyl, 3,6-Dioxadecyl, 3,6-Dioxa-7-phenylheptyl, 3,6-Dioxahexyl, 3,6,9-Trioxadecyl, 3,6,9-Trioxaundecyl, 3,6,9-Trioxatridecyl, 3,6,9-Trioxa-10-phenyldecyl oder 3,6,9-Trioxa-10-hydroxydecyl, Benzyl oder Undec-10-enyl-1 und einer der Ringe A oder B und C oder D unsubstituiert oder durch $C_1$- bis $C_{22}$-Alkyl, 1,3-Dioxabutyl, 1,3-Dioxapentyl, 1,3-Dioxaheptyl, 1,3-Dioxa-4-phenylbutyl, 1,3-Dioxapropyl, 1,3,6-Trioxaheptyl, 1,3,6-Trioxaoctyl, 1,3,6-Trioxadecyl, 1,3,6-Trioxa-7-phenylheptyl, 1,3,6-Trioxahexyl, 1,3,6,9-Tetraoxadecyl, 1,3,6,9-Tetraoxaundecyl, 1,3,6,9-Tetraoxatridecyl, 1,3,6,9-Tetraoxa-10-phenyldecyl, 1,3,6,9-Tetraoxa-10-hydroxyldecyl, Phenyl, $C_1$-bis $C_{22}$-Alkoxy, $C_1$- bis $C_{10}$-Alkylthio, Cyano, $C_1$- bis $C_{16}$-Mono- oder $C_1$- bis $C_{16}$-Dialkylamino, 1-Azacycloalkyl, Chlor, Brom, Hydroxysulfonyl, Phenylthio oder durch den Rest

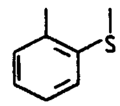

substituiert ist.

Besonders bevorzugt sind Naphtholactamfarbstoffe (I), in denen $R^1$ und $R^2$ für $C_{12}$- bis $C_{22}$-Alkyl, Benzyl, Undec-10-en-yl-1, 3,6-Dioxahexyl, 3,6-Dioxaheptyl, 3,6-Dioxadecyl, 3,6-Dioxa-7-phenylheptyl, 3,6,9-Trioxadecyl, 3,6,9-Trioxatridecyl oder 8-Hydroxyoctyl stehen und die Ringe A, B, C und D unsubstituiert sind.

Die erfindungsgemäßen Farbstoffe werden durch Kondensation von Cycloammoniumverbindungen der Formel II

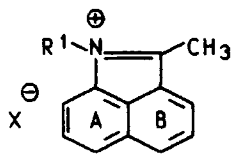

(II)

in der $R^1$, A und B die oben genannten Bedeutungen haben und X J, Cl, Br ist, mit Quadratsäure in einem Lösungsmittel bei Temperaturen von 20 bis 120°C hergestellt.

Die als Ausgangsstoffe benötigten Cyclammoniumverbindungen der Formel II sind bekannt oder können nach an sich bekannten Verfahren hergestellt werden.

Als Lösungsmittel für die Umsetzungen sind z.B. Toluol, Butanol, Propanol oder Gemische davon geeignet.

Die Naphtholactamquadratsäurefarbstoffe der Formel I weisen eine sehr hohe molare Absorption im Bereich von 700 bis 1200 nm auf. Sie sind in organischen Lösungsmitteln und/oder thermoplastischen oder vernetzten Kunststoffen gut löslich.

Die Erfindung betrifft weiterhin optische Aufzeichnungsmedien aus einem Träger und einer Farbstoffschicht oder einer Schicht aus einem thermoplastischen oder vernetzten Polymeren, die einen gegenüber Laserlicht empfindlichen Farbstoff enthält, wobei das Polymere mindestens einen Naphtholactamfarbstoff der Formel I enthält.

Die erfindungsgemäßen Aufzeichnungssysteme haben bei der Wellenlänge der Halbleiterlaser von ca. 750 bis 950 nm eine sehr hohe Absorption. Die Polymerschichten können auf eine lichtreflektierende Schicht so aufgebracht werden, daß sich glatte Absorptionsschichten von hoher optischer Qualität ergeben, die eine günstige Schwellenenergie besitzen, und in die die zu speichernde Information mit hohem Signal-zu-Rauschen-Verhältnis eingeschrieben werden kann.

Die Aufzeichnungsmedien gemäß der Erfindung sind mit einem Halbleiter-Laser beschreibbar und lesbar und gegenüber atmosphärischen Einflüssen und Tageslicht sehr stabil.

Aufgrund der hohen Lichtabsorption der Farbstoffe sind die erfindungsgemäßen Aufzeichnungsmedien sehr empfindlich gegenüber dem Licht des GaAlAs-Halbleiter-Lasers.

Die beim Absorbieren des Laserlichtes entstehende Wärme führt zu einem radial nach außen gerichteten Fließen des Thermoplastes und somit zur Ausbildung von kantenscharfen "Löchern", wodurch ein ausgezeichnetes Signal/Rausch-Verhalten erzielt wird.

Der Aufbau der Aufzeichnungsmedien ist an sich bekannt [J. Vac. Sci. Technol. 18 (1) Jan./Feb. 1981, S. 105].

Zwischen der lichtabsorbierenden Schicht und dem Träger kann eine reflektierende Schicht vorhanden sein, so daß das eingestrahlte und durch die farbige Schicht wandernde Licht (so weit es nicht absorbiert wird) an der Reflektorschicht reflektiert wird und nochmals durch die gefärbte Schicht wandert.

Die Belichtung kann auch durch ein transparentes Substrat erfolgen. Als Schichtfolge kommt dann die Anordnung Substrat-Absorberschichtgegebenenfalls Reflektorschicht in Betracht.

Geeignete lichtreflektierende Materialien sind z.B. Aluminium, Rhodium, Gold, Zinn, Blei, Wismut, Kupfer und dielektrische Spiegel. Die lichtreflektierende Schicht sollte so dick sein, daß diese das zur Aufnahme oder zum Abtasten benutzte Licht möglichst vollständig reflektiert.

Für diesen Zweck sind Spiegel mit geringer Wärmeleitfähigkeit vorteilhaft. Der Träger bzw. die Licht reflektierende Schicht müssen eine optisch glatte, ebene Oberfläche aufweisen und an der Oberfläche so beschaffen sein, daß die absorbierende Schicht darauf fest haftet. Um die Oberflächenqualität und

Adhäsionsphänomene günstig zu beeinflussen, kann der Träger und/oder der Reflektor mit einer Glättungsschicht aus einem duroplastischen oder thermoplastischen Material versehen werden.

Das Aufbringen von metallischen Reflektionsschichten erfolgt vorzugsweise in bekannter Weise durch Aufdampfen im Vakuum oder auch durch Aufbringen geeigneter Metallfolien auf den Träger. Das Aufbringen der erfindungsgemäßen, gegen Laserlicht empfindlichen Schicht erfolgt vorzugsweise durch Aufschleudern von gelöstem oder dispergiertem Farbstoff in Gegenwart von Bindemitteln. Auch Aufrakeln oder Tauchen kommen als Verfahren zur Herstellung der Schichten in Betracht.

Für das Aufbringen der Absorptionsschichten aus Lösung bereitet man in einem geeigneten Lösungsmittel, wie Methylenchlorid, Chloroform, Tetrachlorkohlenstoff, Aceton, Methylethylketon, Cyclohexanon, Toluol, Acetonitril, Essigester, Methanol oder Mischungen dieser Lösungsmittel, eine Lösung oder gegebenenfalls eine Dispersion des Farbstoffs oder Farbstoffgemisches und des Polymeren als Bindemittel zu.

Als Bindemittel kommen entweder durch Strahlung oder Wärme härtbare Harze, z.B. Photopolymere, Silikonharze sowie Epoxidharze oder thermoplastische Kunststoffe infrage.

Bevorzugt sind thermoplastische Kunststoffe mit keinem oder nur sehr geringem kristallinen Anteil und Glastemperaturen von > 35 °C, insbesondere > 75 °C. Darüberhinaus müssen die Bindemittel wie Harze oder thermoplastische Kunststoffe mit den Naphtholactamfarbstoffen der Formel I gut verträglich sein. Geeignet sind beispielsweise wasserunlösliche Bindemittel mit hohem Lösungsvermögen für die Naphtholactamfarbstoffe, wie (Meth)-Acrylatpolymere und -copolymere, Polystyrolhomo-und -copolymerisate, Polyvinylcarbazol, Polyvinylestercopolymere, Polyvinylchlorid und Celluloseester.

Die Farbstoffzubereitung wird durch Rakeln oder Tauchen, vorzugsweise durch Aufschleudern auf ein vorher gereinigtes oder vorbehandeltes Substrat ("subbing-layer") aufgebracht und die Schicht an der Luft getrocknet oder gehärtet. Der Film kann auch im Vakuum, bei erhöhter Temperatur oder gegebenenfalls mit Strahlung, getrocknet bzw. gehärtet werden.

Je nach Systemaufbau wird zuerst die Farbstoff-in-Polymer-Schicht und dann der Reflektor aufgebracht oder umgekehrt verfahren. Auf das Aufbringen von Zwischen- und Schutzschichten oder einer reflektierenden Schicht kann gegebenenfalls verzichtet werden.

Wenn auf Zwischenschichten nicht verzichtet werden kann, muß unter Berücksichtigung des Brechungsindex des dazu verwendeten Materials und der verwendeten Laserlichtwellenlänge die Schichtdicke der Zwischenschicht so gewählt werden, daß keine störenden Interferenzen auftreten können.

Sofern die Farbstoff-in-Polymer-Schicht keine ausreichende mechanische Stabilität aufweist, kann diese mit einer transparenten Schutzschicht überzogen werden. Hierzu bieten sich eine Reihe von Polymeren an, welche in gelöster Form durch Aufschleudern, Aufrakeln oder Tauchen von gelösten Polymeren oder durch Aufdampfen im Vakuum, z.B. von fluorierten Polymeren, aufgebracht werden können.

Wenn das System (Datenspeicher) aus zwei gleichen oder verschiedenen Aufzeichnungsmedien in Form eines "Sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Die nachfolgenden Beispiele sollen die Erfindung weiter erläutern.

| | |
|---|---|
| DAA | = Diacetonalkohol |
| THF | = Tetrahydrofuran |
| DMF | = N,N-Dimethylformamid |
| PMMA | = Polymethylmethacrylat |

A. Herstellung der Farbstoffe

Beispiel 1

650 mg (5,7 mmol) Quadratsäure werden heiß in 40 ml Butanol und 40 ml Toluol gelöst. Dann gibt man 5,01 g (11,4 mmol) 1-Dodecyl-2-methylbenzo[c,d]indoliumjodid hinzu und kocht 2 h unter Rückfluß. Die Reaktionslösung wird am Rotationsverdampfer eingeengt, mit 100 ml Aceton bei 0 °C 2 h gerührt und abgesaugt. Das so erhaltene rote Pulver läßt man 2 h mit Butanon-2 bei 0 °C rühren, saugt ab und wäscht mit Ether nach.

Ausbeute: 2,4 g des Farbstoffs der Formel

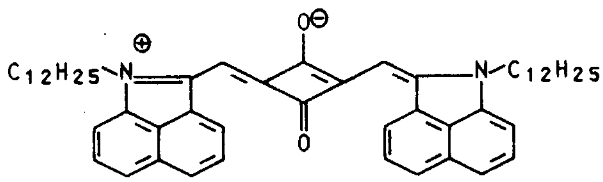

Absorptionsmaximum: 879 nm (DAA)

Beispiele 2 bis 17

Die in der folgenden Tabelle angegebenen Farbstoffe wurden analog Beispiel 1 hergestellt. Das bei der Bestimmung des Absorptionsmaximums verwendete Lösungsmittel ist nach der Wellenlänge in Klammern angegeben.

| Beisp. | Farbstoff | $\lambda$ max [nm] |
|---|---|---|
| 2 | 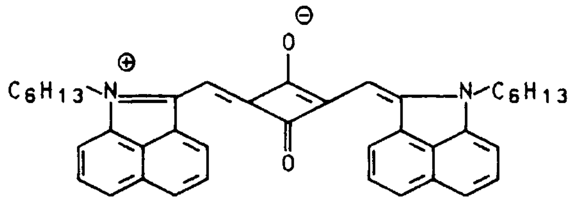 | 865 (EtOH) |
| 3 | 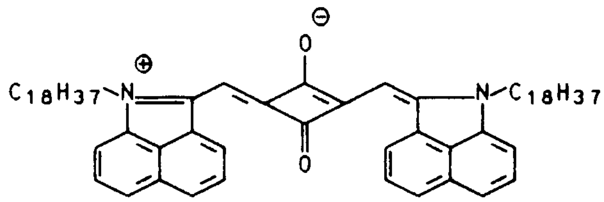 | 866 (EtOH) |
| 4 | 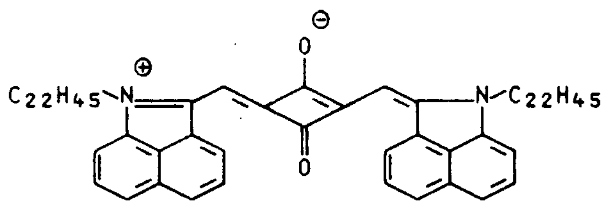 | 892 (THF) |
| 5 | 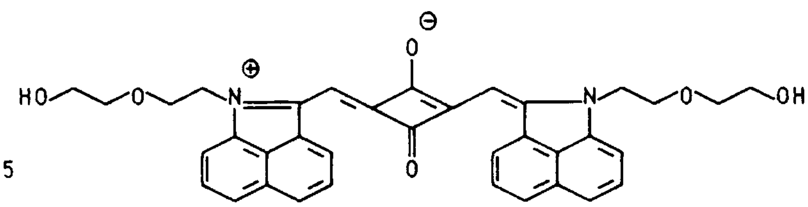 | 865 (EtOH) |
| 6 | 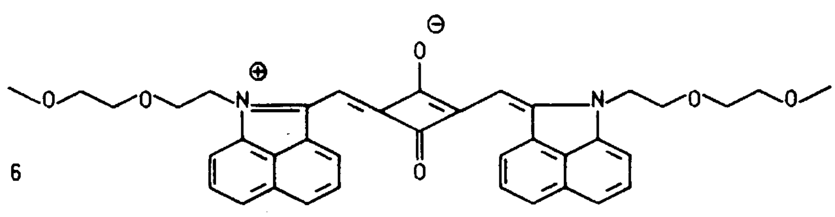 | 878 (DAA) |
| 7 | 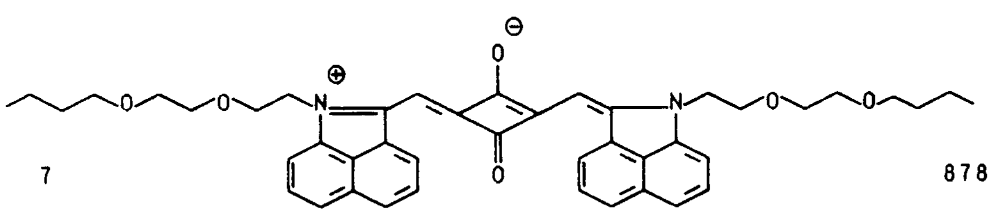 | 878 (DAA) |

| Beisp. | Farbstoff | λ max [nm] |
|---|---|---|
| 8 | 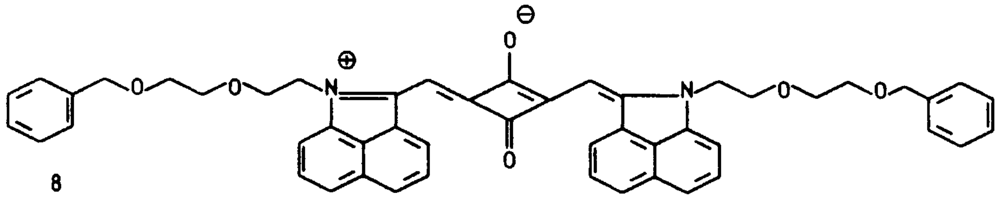 | 888 (THF) |
| 9 | 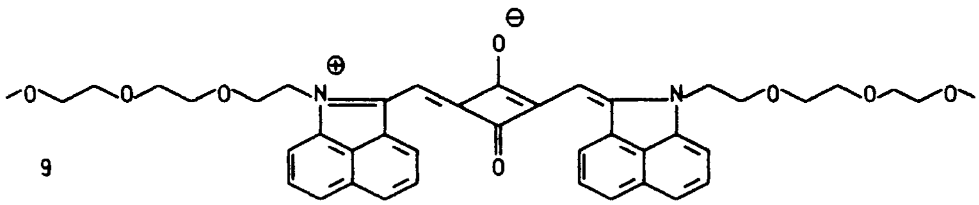 | 893 (DMF) |
| 10 | 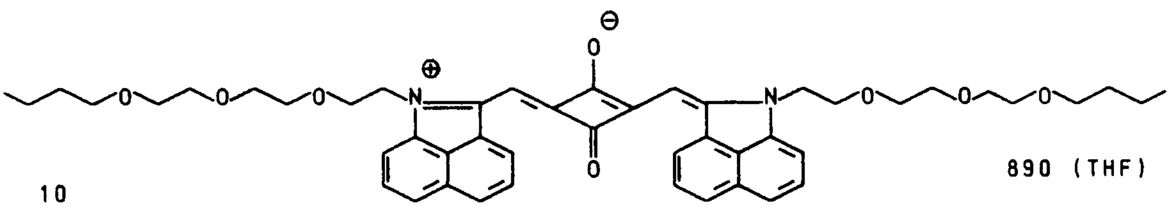 | 890 (THF) |
| 11 | 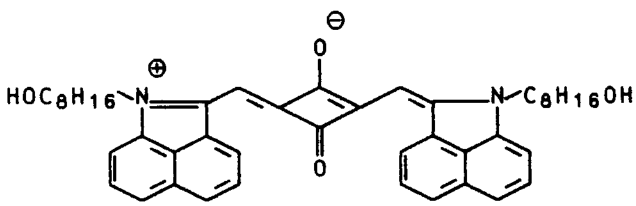 | 865 (EtOH) |
| 12 | 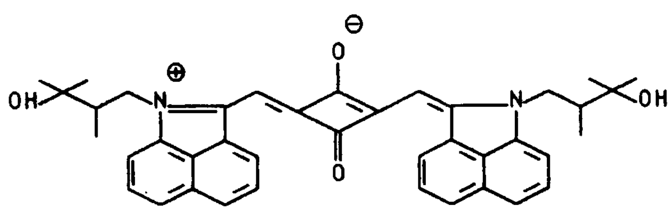 | 865 (EtOH) |
| 13 | 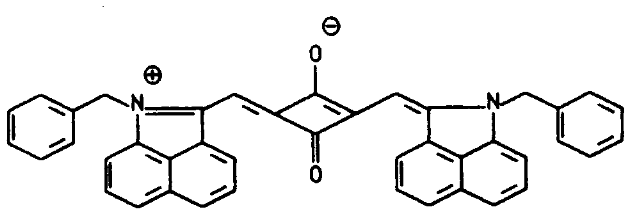 | 884 (THF) |

14 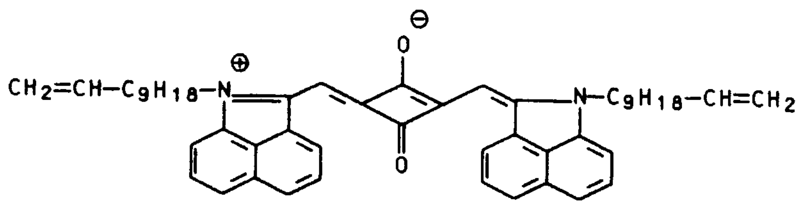 890 (THF)

15 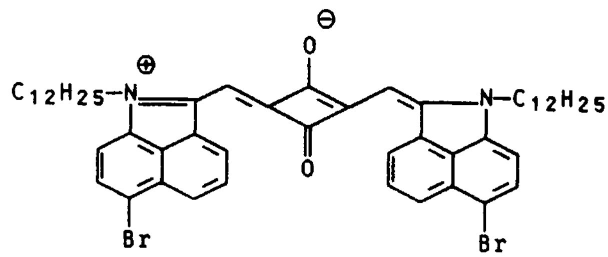 870 (EtOH)

16 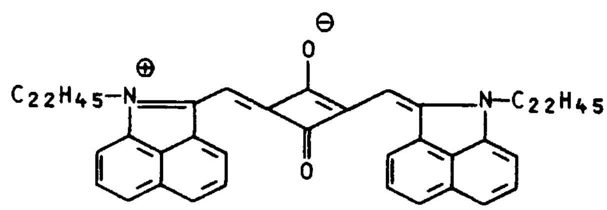 891 (THF)

17 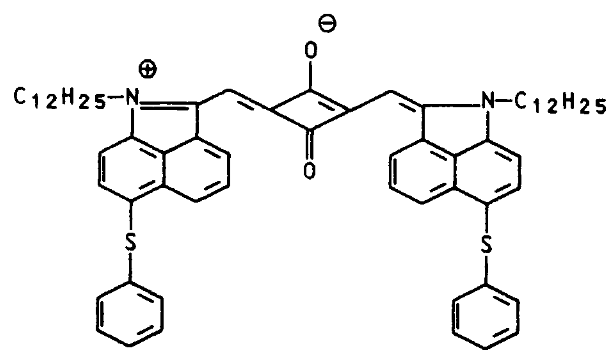 895 (THF)

B. Herstellung des optischen Aufzeichnungsmediums

Es werden 0,0866 g hochmolekulares PMMA in 0,346 g Essigester gelöst und 0,202 g Farbstoff Nr. 7 sowie 6,56 g Toluol zugegeben. Nach 1 Stunde Rühren wird die gesättigte Lösung filtriert und bei 2000 Upm auf ein PMMA-Substrat aufgeschleudert. Die homogene Schicht hat eine Schichtdicke von 80 nm und weist eine breite Absorptionsbande mit einem Maximum von 800 nm auf. Die Extinktion beträgt bei 830 nm 0,5. Mit einem auf einem Drehtisch montierten AlGaAs-Laser (λ = 820 nm) wurden einzelne, etwa 1 μ große Löcher in die aktive Schicht geschrieben. Die Empfindlichkeit der Schicht war besser als 1 nJ/Loch, beim Auslesen der Punkte wurde ein ausgezeichnetes Signal/Rauschen-Verhältnis gefunden.

**Patentansprüche**

**1.** Naphtholactamquadratsäurefarbstoffe der Formel

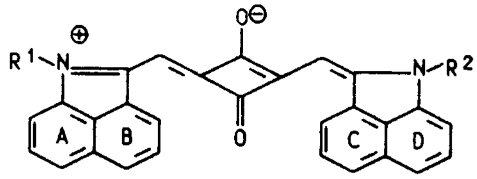

(I),

in der $R^1$ und $R^2$ unabhängig voneinander gegebenenfalls durch Phenyl, Halogen, $C_1$ bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiertes $C_3$- bis $C_{22}$-Alkyl, wobei die Alkylkette durch Sauerstoffatome unterbrochen sein kann, $C_1$- bis $C_4$-Aralkyl, gegebenenfalls durch $C_1$- bis $C_4$-Alkyl oder Halogen substituiertes $C_5$- bis $C_7$-Cycloalkyl oder gegebenenfalls durch $C_1$- bis $C_4$-Alkyl, $C_1$- bis $C_4$-Alkoxy, Halogen oder $C_1$-bis $C_4$-Dialkylamino substituiertes Phenyl sind und in der die Ringe A, B, C und D gegebenenfalls durch $C_1$- bis $C_{22}$-Alkyl, das gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiert ist und dessen Alkylkette durch Sauerstoffatome unterbrochen sein kann, Phenyl, $C_1$- bis $C_{22}$-Alkoxy, $C_1$- bis $C_{20}$-Alkylthio, Halogen, Nitro, Cyano, $C_1$- bis $C_4$-Mono- oder -Dialkylamino, 1-Azacycloalkyl, $C_1$- bis $C_4$-Alkylsulfonyl, $C_1$- bis $C_4$-Alkoxysulfonyl, Phenylsulfonyl, $C_1$- bis $C_4$-Alkylphenylsulfonyl, Hydroxysulfonyl, Anilino, $C_1$- bis $C_4$-Alkylanilino, $C_1$- bis $C_4$-Alkanoyl, $C_1$- bis $C_4$-Alkanoylamino, $C_1$- bis $C_4$-Alkoxycarbonyl, $C_1$- bis $C_4$-Alkoxycarbonylamino, Carbamoyl, $C_1$- bis $C_4$-N-Mono- oder $C_1$- bis $C_4$-N,N-Dialkylcarbamoyl, Sulfamoyl, $C_1$- bis $C_4$-N-Mono- oder N,N-$C_1$- bis $C_4$-Dialkylsulfamoyl, Ureido, durch $C_1$ bis $C_4$-Alkyl substituiertes Ureido, Phenoxy, Phenylthio oder den Rest

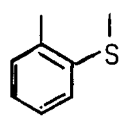

substituiert und/oder benzoanelliert sind.

2. Naphtholactamquadratsäurefarbstoffe gemäß Anspruch 1, dadurch gekennzeichnet, daß $R^1$ und $R^2$ unabhängig voneinander für gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$ bis $C_4$-Alkylanilino substituiertes $C_3$- bis $C_{22}$-Alkyl stehen und worin die Alkylkette gegebenenfalls durch Sauerstoff unterbrochen ist und die Ringe A, B, C und D gegebenenfalls durch $C_1$ bis $C_{22}$-Alkyl, Phenyl, $C_1$- bis $C_{22}$-Alkoxy, $C_1$- bis $C_{20}$-Alkylthio, Halogen, Nitro, Cyano, $C_1$- bis $C_4$-Mono- oder -Dialkylamino, 1-Azacycloalkyl, $C_1$- bis $C_4$-Alkylsulfonyl, $C_1$- bis $C_4$-Alkoxysulfonyl, Phenylsulfonyl, $C_1$- bis $C_4$-Alkylphenylsulfonyl, Hydroxysulfonyl, Anilino, $C_1$- bis $C_4$-Alkylanilino, $C_1$- bis $C_4$-Alkanoyl, $C_1$- bis $C_4$-Alkanoylamino, $C_1$- bis $C_4$-Alkoxycarbonyl, $C_1$- bis $C_4$-Alkoxycarbonylamino, Carbamoyl, $C_1$- bis $C_4$-N-Mono- oder $C_1$- bis $C_4$-N,N-Dialkylcarbamoyl, Sulfamoyl, $C_1$- bis $C_4$-N-Mono- oder N,N-$C_1$- bis $C_4$-Dialkylsulfamoyl, Ureido, durch $C_1$- bis $C_4$-Alkyl substituiertes Ureido, Phenoxy, Phenylthio oder den Rest

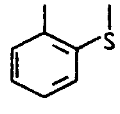

substituiert oder benzoanelliert sind.

3. Naphtholactamquadratsäurefarbstoffe gemäß Anspruch 1, dadurch gekennzeichnet, daß $R^1$ und $R^2$ unabhängig voneinander für $C_6$- bis $C_{22}$-Alkyl, 2-Methoxyethyl, 2,3,3-Trimethyl-4-hydroxybutyl, 2-Ethoxyethyl, 2-n-Butoxyethyl, 2-Benzyloxylethyl, 2-Hydroxyethyl, 8-Hydroxyoctyl, 3,6-Dioxaheptyl, 3,6-Dioxaoctyl, 3,6-Dioxadecyl, 3,6-Dioxa-7-phenylheptyl, 3,6-Dioxahexyl, 3,6,9-Trioxadecyl, 3,6,9-Trioxaundecyl, 3,6,9-Trioxatridecyl, 3,6,9-Trioxa-10-phenyldecyl, 3,6,9-Trioxa-10-hydroxydecyl, Benzyl oder Undec-10-enyl-1 stehen und einer der Ringe A oder B und C oder D unsubstituiert oder durch $C_1$- bis $C_{22}$-Alkyl, 1,3-Dioxabutyl, 1,3-Dioxapentyl, 1,3-Dioxaheptyl, 1,3-Dioxa-4-phenylbutyl, 1,3-Dioxapropyl, 1,3,6-Trioxaheptyl, 1,3,6-Trioxaoctyl, 1,3,6-Trioxadecyl, 1,3,6-Trioxa-7-phenylheptyl, 1,3,6-Trioxahexyl, 1,3,6,9-Tetraoxadecyl, 1,3,6,9-Tetraoxaundecyl, 1,3,6,9-Tetraoxatridecyl, 1,3,6,9-Tetraoxa-10-phenyl-decyl, 1,3,6,9-Tetraoxa-10-hydroxyldecyl, Phenyl, $C_1$- bis $C_{22}$-Alkoxy, $C_1$-bis $C_{10}$-Alkylthio, Cyano, $C_1$- bis $C_{16}$-Mono- oder $C_1$-bis $C_{16}$-Dialkylamino, 1-Azacycloalkyl, Chlor, Brom, Hydroxysulfonyl, Phenylthio oder den Rest

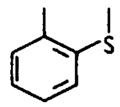

substituiert ist.

**4.** Naphtholactamquadratsäurefarbstoffe gemäß Anspruch 1, dadurch gekennzeichnet, daß $R^1$ und $R^2$ für $C_{12}$- bis $C_{22}$-Alkyl, Benzyl, Undec-10-enyl-1, 3,6-Dioxahexyl, 3,6-Dioxaheptyl, 3,6-Dioxadecyl, 3,6-Dioxa-7-phenylheptyl, 3,6,9-Trioxadecyl, 3,6,9-Trioxatridecyl oder 8-Hydroxyoctyl stehen und die Ringe A, B, C und D unsubstituiert sind.

**5.** Optisches Aufzeichnungsmedium aus einem Träger und einer gegenüber Laserlicht empfindlichen Farbstoffschicht oder einer Farbstoff enthaltenden Schicht aus einem thermoplastischen oder vernetzten Polymeren, dadurch gekennzeichnet, daß das Polymere mindestens einen Naphtholactamquadratsäurefarbstoff der Formel

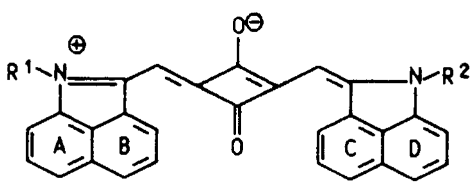

(I),

enthält, in der $R^1$ und $R^2$ unabhängig voneinander gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiertes $C_3$- bis $C_{22}$-Alkyl, wobei die Alkylkette durch Sauerstoffatome unterbrochen sein kann, $C_1$-bis $C_4$-Aralkyl, gegebenenfalls durch $C_1$- bis $C_4$-Alkyl oder Halogen substituiertes $C_5$- bis $C_7$-Cycloalkyl oder gegebenenfalls durch $C_1$- bis $C_4$-Alkyl, $C_1$- bis $C_4$-Alkoxy, Halogen oder $C_1$- bis $C_4$-Dialkylamino substituiertes Phenyl sind und in der die Ringe A, B, C und D gegebenenfalls durch $C_1$- bis $C_{22}$-Alkyl, das gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiert ist und dessen Alkylkette durch Sauerstoffatome unterbrochen sein kann, Phenyl, $C_1$- bis $C_{22}$-Alkoxy, $C_1$- bis $C_{20}$-Alkylthio, Halogen, Nitro, Cyano, $C_1$- bis $C_4$-Mono- oder -Dialkylamino, 1-Azacycloalkyl, $C_1$- bis $C_4$-Alkylsulfonyl, $C_1$- bis $C_4$-Alkoxysulfonyl, Phenylsulfonyl, $C_1$- bis $C_4$-Alkylphenylsulfonyl, Hydroxysulfonyl, Anilino, $C_1$- bis $C_4$-Alkylanilino, $C_1$- bis $C_4$-Alkanoyl, $C_1$- bis $C_4$-Alkanoylamino, $C_1$- bis $C_4$-Alkoxycarbonyl, $C_1$- bis $C_4$-Alkoxycarbonylamino, Carbamoyl, $C_1$- bis $C_4$-N-Mono- oder $C_1$- bis $C_4$-N,N-Dialkylcarbamoyl, Sulfamoyl, $C_1$- bis $C_4$-N-Mono- oder N,N-$C_1$- bis $C_4$-Dialkylsulfamoyl, Ureido, durch $C_1$- bis $C_4$-Alkyl substituiertes Ureido, Phenoxy, Phenylthio oder den Rest

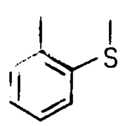

substituiert und/oder benzoanelliert sind.

6. Optisches Aufzeichnungssystem gemäß Anspruch 5, dadurch gekennzeichnet, daß $R^1$ und $R^2$ unabhängig voneinander für gegebenenfalls durch Phenyl, Halogen, $C_1$- bis $C_4$-Alkanoyl, Carboxyl, $C_1$- bis $C_4$-Alkanoylamino, $C_1$- bis $C_4$-Alkoxycarbonyl, $C_1$- bis $C_4$-Alkoxycarbonylamino oder $C_1$- bis $C_4$-Alkylanilino substituiertes $C_3$- bis $C_{22}$-Alkyl stehen und wobei die Alkylkette gegebenenfalls durch Sauerstoff unterbrochen ist und die Ringe A, B, C und D gegebenenfalls durch $C_1$- bis $C_{22}$-Alkyl, Phenyl, $C_1$- bis $C_{22}$-Alkoxy, $C_1$- bis $C_{20}$-Alkylthio, Halogen, Nitro, Cyano, $C_1$- bis $C_4$-Mono- oder -Dialkylamino, 1-Azacycloalkyl, $C_1$- bis $C_4$-Alkylsulfonyl, $C_1$- bis $C_4$-Alkoxysulfonyl, Phenylsulfonyl, $C_1$- bis $C_4$-Alkylphenylsulfonyl, Hydroxysulfonyl, Anilino, $C_1$- bis $C_4$-Alkylanilino, $C_1$- bis $C_4$-Alkanoyl, $C_1$- bis $C_4$-Alkanoylamino, $C_1$- bis $C_4$-Alkoxycarbonyl, $C_1$- bis $C_4$-Alkoxycarbonylamino, Carbamoyl, $C_1$- bis $C_4$-N-Mono- oder $C_1$- bis $C_4$-N,N-Dialkylcarbamoyl, Sulfamoyl, $C_1$-$C_4$-N-Mono- oder N,N-$C_1$- bis $C_4$-Dialkylsulfamoyl, Ureido, durch $C_1$- bis $C_4$-Alkyl substituiertes Ureido, Phenoxy, Phenylthio oder den Rest

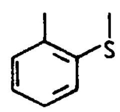

substituiert oder benzoanelliert sind.

7. Optisches Aufzeichnungsmedium gemäß Anspruch 5, dadurch gekennzeichnet, daß $R^1$ und $R^2$ unabhängig voneinander für $C_6$- bis $C_{22}$-Alkyl, 2-Methoxyethyl, 2,3,3-Trimethyl-4-hydroxybutyl, 2-Ethoxyethyl, 2-n-Butoxyethyl, 2-Benzyloxylethyl, 2-Hydroxyethyl, 8-Hydroxyoctyl, 3,6-Dioxaheptyl, 3,6-Dioxaoctyl, 3,6-Dioxadecyl, 3,6-Dioxa-7-phenylheptyl, 3,6-Dioxahexyl, 3,6,9-Trioxadecyl, 3,6,9-Trioxaundecyl, 3,6,9-Trioxatridecyl, 3,6,9-Trioxa-10-phenyldecyl, 3,6,9-Trioxa-10-hydroxydecyl, Benzyl oder Undec-10-enyl-1 stehen und einer der Ringe A oder B und C oder D unsubstituiert oder durch $C_1$- bis $C_{22}$-Alkyl, 1,3-Dioxabutyl, 1,3-Dioxapentyl, 1,3-Dioxaheptyl, 1,3-Dioxa-4-phenylbutyl, 1,3-Dioxapropyl, 1,3,6-Trioxaheptyl, 1,3,6-Trioxaoctyl, 1,3,6-Trioxadecyl, 1,3,6-Trioxa-7-phenylheptyl, 1,3,6-Trioxahexyl, 1,3,6-Tetraoxadecyl, 1,3,6,9-Tetraoxaundecyl, 1,3,6,9-Tetraoxatridecyl, 1,3,6,9-Tetraoxa-1O-phenyldecyl, 1,3,6,9-Tetraoxa-10-hydroxyldecyl, Phenyl, $C_1$- bis $C_{22}$-Alkoxy, $C_1$-bis $C_{10}$-Alkylthio, Cyano, $C_1$- bis $C_{16}$-Mono- oder $C_1$-bis $C_{16}$-Dialkylamino, 1-Azacycloalkyl, Chlor, Brom, Hydroxysulfonyl, Phenylthio oder den Rest

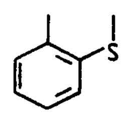

substituiert ist.

8. Optisches Aufzeichnungsmedium gemäß Anspruch 5, dadurch gekennzeichnet, daß $R^1$ und $R^2$ für $C_{12}$- bis $C_{22}$-Alkyl, Benzyl, Undec-10-enyl-1, 3,6-Dioxahexyl, 3,6-Dioxaheptyl, 3,6-Dioxadecyl, 3,6-Dioxa-7-phenylheptyl, 3,6,9-Trioxadecyl, 3,6,9-Trioxatridecyl oder 8-Hydroxyoctyl stehen und die Ringe A, B, C und D unsubstituiert sind.

## Claims

1. A naphtholactamsquaric acid dye of the formula

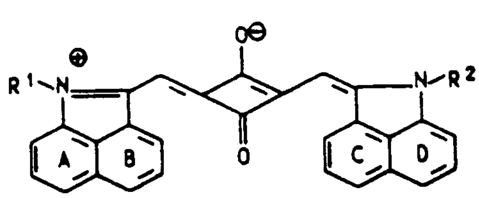

(I)

where $R^1$ and $R^2$ independently of one another are each $C_3$-$C_{22}$-alkyl which is unsubstituted or substituted by phenyl, halogen, $C_1$-$C_4$-alkanoyl, carboxyl, $C_1$-$C_4$-alkanoylamino, $C_1$-$C_4$-alkoxycarbonyl, $C_1$-$C_4$-alkoxycarbonylamino or $C_1$-$C_4$-alkylanilino, in which the alkyl chain can be interrupted by oxygen, $C_1$-$C_4$-aralkyl, $C_5$-$C_7$-cycloalkyl which is unsubstituted or substituted by $C_1$-$C_4$-alkyl or halogen, or phenyl which is unsubstituted or substituted by $C_1$-$C_4$-alkyl, $C_1$-$C_4$-alkoxy, halogen or $C_1$-$C_4$-dialkylamino, and in which the rings A, B, C and D are unsubstituted or substituted by $C_1$-$C_{22}$-alkyl, which is unsubstituted or substituted by phenyl, halogen, $C_1$-$C_4$-alkanoyl, carboxyl, $C_1$-$C_4$-alkanoylamino, $C_1$-$C_4$-alkoxycarbonyl, $C_1$-$C_4$-alkoxycarbonylamino or $C_1$-$C_4$-alkylanilino and the alkyl chain of which may be interrupted by oxygen atoms, or are substituted by phenyl, $C_1$-$C_{22}$-alkoxy, $C_1$-$C_{20}$-alkylthio, halogen, nitro, cyano, $C_1$-$C_4$-mono- or dialkylamino, 1-azacycloalkyl, $C_1$-$C_4$-alkylsulfonyl, $C_1$-$C_4$-alkoxysulfonyl, phenylsulfonyl, $C_1$-$C_4$-alkylphenylsulfonyl, hydroxysulfonyl, anilino, $C_1$-$C_4$-alkylanilino, $C_1$-$C_4$-alkanoyl, $C_1$-$C_4$-alkanoylamino, $C_1$-$C_4$-alkoxycarbonyl, $C_1$-$C_4$-alkoxycarbonylamino, carbamyl, $C_1$-$C_4$-N-mono- or $C_1$-$C_4$-N,N-dialkylcarbamyl, sulfamyl, $C_1$-$C_4$-N-mono- or N,N-$C_1$-$C_4$-dialkylsulfamyl, ureido, $C_1$-$C_4$-alkyl-substituted ureido, phenoxy, phenylthio or the radical

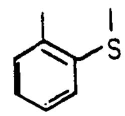

and/or benzofused.

**2.** A naphtholactamsquaric acid dye as claimed in claim 1, wherein $R^1$ and $R^2$ independently of one another are each $C_3$-$C_{22}$-alkyl which is unsubstituted or substituted by phenyl, halogen, $C_1$-$C_4$-alkanoyl, carboxyl, $C_1$-$C_4$-alkanoylamino, $C_1$-$C_4$-alkoxycarbonyl, $C_1$-$C_4$-alkoxycarbonylamino or $C_1$-$C_4$-alkylanilino and in which the alkyl chain may be interrupted by oxygen, and the rings A, B, C and D are unsubstituted or substituted by $C_1$-$C_{22}$-alkyl, phenyl, $C_1$-$C_{22}$-alkoxy, $C_1$-$C_{20}$-alkylthio, halogen, nitro, cyano, $C_1$-$C_4$-mono- or dialkylamino, 1-azacycloalkyl, $C_1$-$C_4$-alkylsulfonyl, $C_1$-$C_4$-alkoxysulfonyl, phenylsulfonyl, $C_1$-$C_4$-alkylphenylsulfonyl, hydroxysulfonyl, anilino, $C_1$-$C_4$-alkylanilino, $C_1$-$C_4$-alkanoyl, $C_1$-$C_4$-alkanoylamino, $C_1$-$C_4$-alkoxycarbonyl, $C_1$-$C_4$-alkoxycarbonylamino, carbamyl, $C_1$-$C_4$-N-mono- or $C_1$-$C_4$-N,N-dialkylcarbamyl, sulfamyl, $C_1$-$C_4$-N-mono- or N,N-$C_1$-$C_4$-dialkylsulfamyl, ureido, $C_1$-$C_4$-alkyl-substituted ureido, phenoxy, phenylthio or the radical

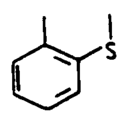

or benzofused.

**3.** A naphtholactamsquaric acid dye as claimed in claim 1, wherein $R^1$ and $R^2$ independently of one another are each $C_6$-$C_{22}$-alkyl, 2-methoxyethyl, 2,3,3-trimethyl-4-hydroxybutyl, 2-ethoxyethyl, 2-n-butoxyethyl, 2-benzyloxyethyl, 2-hydroxyethyl, 8-hydroxyoctyl, 3,6-dioxaheptyl, 3,6-dioxaoctyl, 3,6-dioxadecyl, 3,6-dioxa7-phenylheptyl, 3,6-dioxahexyl, 3,6,9-trioxadecyl, 3,6,9-trioxaundecyl, 3,6,9-trioxatridecyl, 3,6,9-trioxa-10-phenyldecyl, 3,6,9-trioxa-10-hydroxydecyl, benzyl or undec-10-en-1-yl, and one of the rings A or B or C or D is unsubstituted or substituted by $C_1$-$C_{22}$-alkyl, 1,3-dioxabutyl, 1,3-dioxapentyl, 1,3-dioxaheptyl, 1,3-dioxa-4-phenylbutyl, 1,3-dioxapropyl, 1,3,6-trioxaheptyl, 1,3,6-trioxaoctyl, 1,3,6-trioxadecyl, 1,3,6-trioxa-7-phenyl-heptyl, 1,3,6-trioxahexyl, 1,3,6,9-tetraoxadecyl, 1,3,6,9-tetraoxaundecyl, 1,3,6,9-tetraoxatridecyl, 1,3,6,9-tetraoxa-10-phenyldecyl, 1,3,6,9-tetraoxa-10-hydroxydecyl, phenyl, $C_1$-$C_{22}$-alkoxy, $C_1$-$C_{10}$-alkylthio, cyano, $C_1$-$C_{16}$-mono- or $C_1$-$C_{16}$-dialkylamino, 1-azacycloalkyl, chlorine, bromine, hydroxysulfonyl, phenylthio or the radical

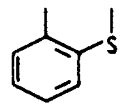

4. A naphtholactamsquaric acid dye as claimed in claim 1, wherein $R^1$ and $R^2$ are each $C_{12}$-$C_{22}$-alkyl, benzyl, undec-10-en-1-yl, 3,6-dioxahexyl, 3,6-dioxaheptyl, 3,6-dioxadecyl, 3,6-dioxa-7-phenylheptyl, 3,6,9-trioxadecyl, 3,6,9-trioxatridecyl or 8-hydroxyoctyl, and the rings A, B, C and D are unsubstituted.

5. An optical recording material consisting of a base and a dye layer which is sensitive to laser light or a dye-containing layer of a thermoplastic or crosslinked polymer, wherein the polymer contains one or more naphtholactamsquaric acid dyes of the formula

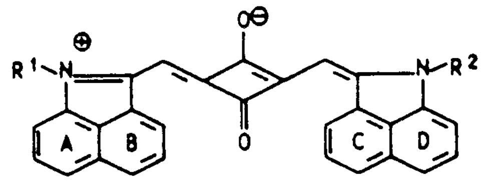

(I)

where $R^1$ and $R^2$ independently of one another are each $C_3$-$C_{22}$-alkyl which is unsubstituted or substituted by phenyl, halogen, $C_1$-$C_4$-alkanoyl, carboxyl, $C_1$-$C_4$-alkanoylamino, $C_1$-$C_4$-alkoxycarbonyl, $C_1$-$C_4$-alkoxycarbonylamino or $C_1$-$C_4$-alkylanilino in which the alkyl chain can be interrupted by oxygen, $C_1$-$C_4$-aralkyl, $C_5$-$C_7$-cycloalkyl which is unsubstituted or substituted by $C_1$-$C_4$-alkyl or halogen, or phenyl which is unsubstituted or substituted by $C_1$-$C_4$-alkyl, $C_1$-$C_4$-alkoxy, halogen or $C_1$-$C_4$-dialkylamino, and in which the rings A, B, C and D are unsubstituted or substituted by $C_1$-$C_{22}$-alkyl, which is unsubstituted or substituted by phenyl, halogen, $C_1$-$C_4$-alkanoyl, carboxyl, $C_1$-$C_4$-alkanoylamino, $C_1$-$C_4$-alkoxycarbonyl, $C_1$-$C_4$-alkoxycarbonylamino or $C_1$-$C_4$-alkylanilino and the alkyl chain of which may be interrupted by oxygen atoms, or are substituted by phenyl, $C_1$-$C_{22}$-alkoxy, $C_1$-$C_{20}$-alkylthio, halogen, nitro, cyano, $C_1$-$C_4$-mono- or dialkylamino, 1-azacycloalkyl, $C_1$-$C_4$-alkylsulfonyl, $C_1$-$C_4$-alkoxysulfonyl, phenylsulfonyl, $C_1$-$C_4$-alkylphenylsulfonyl, hydroxysulfonyl, anilino, $C_1$-$C_4$-alkylanilino, $C_1$-$C_4$-alkanoyl, $C_1$-$C_4$-alkanoylamino, $C_1$-$C_4$-alkoxycarbonyl, $C_1$-$C_4$-alkoxycarbonylamino, carbamyl, $C_1$-$C_4$-N-mono- or $C_1$-$C_4$-N,N-dialkylcarbamyl, sulfamyl, $C_1$-$C_4$-N-mono- or N,N-$C_1$-$C_4$-dialkylsulfamyl, ureido, $C_1$-$C_4$-alkyl-substituted ureido, phenoxy, phenylthio or the radical

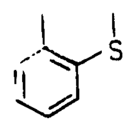

and/or benzofused.

6. An optical recording system as claim in claim 5, wherein $R^1$ and $R^2$ independently of one another are each $C_3$-$C_{22}$-alkyl which is unsubstituted or substituted by phenyl, halogen, $C_1$-$C_4$-alkanoyl, carboxyl, $C_1$-$C_4$-alkanoylamino, $C_1$-$C_4$-alkoxycarbonyl, $C_1$-$C_4$-alkoxycarbonylamino or $C_1$-$C_4$-alkylanilino and in which the alkyl chain may be interrupted by oxygen, and the rings A, B, C and D are unsubstituted or substituted by $C_1$-$C_{22}$-alkyl, phenyl, $C_1$-$C_{22}$-alkoxy, $C_1$-$C_{20}$-alkylthio, halogen, nitro, cyano, $C_1$-$C_4$-mono- or dialkylamino, 1-azacycloalkyl, $C_1$-$C_4$-alkylsulfonyl, $C_1$-$C_4$-alkoxysulfonyl, phenylsulfonyl, $C_1$-$C_4$-alkylphenylsulfonyl, hydroxysulfonyl, anilino, $C_1$-$C_4$-alkylanilino, $C_1$-$C_4$-alkanoyl, $C_1$-$C_4$-alkanoylamino, $C_1$-$C_4$-alkoxycarbonyl, $C_1$-$C_4$-alkoxycarbonylamino, carbamyl, $C_1$-$C_4$-N-mono- or $C_1$-$C_4$-N,N-dialkylcarbamyl, sulfamyl, $C_1$-$C_4$-N-mono- or N,N-$C_1$-$C_4$-dialkylsulfamyl, ureido, $C_1$-$C_4$-alkyl-substituted ureido, phenoxy, phenylthio or the radical

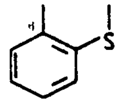

or benzofused.

**7.** An optical recording material as claimed in claim 5, wherein $R^1$ and $R^2$ independently of one another are each $C_6$-$C_{22}$-alkyl, 2-methoxyethyl, 2,3,3-trimethyl-4-hydroxybutyl, 2-ethoxyethyl, 2-n-butoxyethyl, 2-benzyloxyethyl, 2-hydroxyethyl, 8-hydroxyoctyl, 3,6-dioxaheptyl, 3,6-dioxaoctyl, 3,6-dioxadecyl, 3,6-dioxa-7-phenylheptyl, 3,6-dioxahexyl, 3,6,9-trioxadecyl, 3,6,9-trioxaundecyl, 3,6,9-trioxatridecyl, 3,6,9-trioxa-10-phenyldecyl, 3,6,9-trioxa-10-hydroxydecyl, benzyl or undec-10-en-1-yl, and one of the rings A or B or C or D is unsubstituted or substituted by $C_1$-$C_{22}$-alkyl, 1,3-dioxabutyl, 1,3-dioxapentyl, 1,3-dioxaheptyl, 1,3-dioxa-4-phenylbutyl, 1,3-dioxapropyl, 1,3,6-trioxaheptyl, 1,3,6-trioxaoctyl, 1,3,6-trioxadecyl, 1,3,6-trioxa-7-phenylheptyl, 1,3,6-trioxahexyl, 1,3,6-tetraoxadecyl[sic], 1,3,6,9-tetraoxaundecyl, 1,3,6,9-tetraoxatridecyl, 1,3,6,9-tetraoxa-10-phenyldecyl, 1,3,6,9-tetraoxa-10-hydroxydecyl, phenyl, $C_1$-$C_{22}$-alkoxy, $C_1$-$C_{10}$-alkylthio, cyano, $C_1$-$C_{16}$-mono- or $C_1$-$C_{16}$-dialkylamino, 1-azacycloalkyl, chlorine, bromine, hydroxysulfonyl, phenylthio or the radical

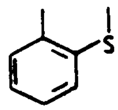

**8.** An optical recording material as claimed in claim 5, wherein $R^1$ and $R^2$ are each $C_{12}$-$C_{22}$-alkyl, benzyl, undec-10-en-1-yl, 3,6-dioxahexyl, 3,6-dioxaheptyl, 3,6-dioxadecyl, 3,6-dioxa-7-phenylheptyl, 3,6,9-trioxadecyl, 3,6,9-trioxatridecyl or 8-hydroxyoctyl, and the rings A, B, C and D are unsubstituted.

## Revendications

**1.** Colorants d'acide naphtolactamequadratique de formule

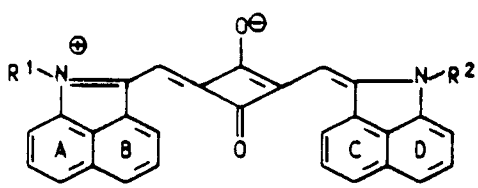

(I),

dans laquelle $R^1$ et $R^2$ indépendamment l'un de l'autre représentent un groupement alkyle en $C_3$-$C_{22}$ éventuellement substitué par des radicaux phényle, halogéno, alcanoyle en $C_1$-$C_4$, carboxy, alcanoylamino en $C_1$-$C_4$, (alcoxy en $C_1$-$C_4$)carbonyle, (alcoxy en $C_1$-$C_4$)carbonylamino ou (alkyl en $C_1$-$C_4$)anilino, où les chaînes alkyle peuvent être interrompues par des atomes d'oxygène, un groupement aralkyle en $C_1$-$C_4$, un groupement cycloalkyle en $C_5$-$C_7$ éventuellement substitué par des radicaux alkyle en $C_1$-$C_4$ ou halogéno ou un groupement phényle éventuellement substitué par des radicaux alkyle en $C_1$-$C_4$, alcoxy en $C_1$-$C_4$, halogéno ou di(alkyl en $C_1$-$C_4$)amino et
dans laquelle les noyaux A, B, C et D sont éventuellement substitués par des groupements alkyle en $C_1$-$C_{22}$, ceux-ci pouvant éventuellement être substitués par des radicaux phényle, halogéno, alcanoyle en $C_1$-$C_4$,carboxy, alcanoylamino en $C_1$-$C_4$, (alcoxy en $C_1$-$C_4$)-carbonyle, (alcoxy en $C_1$-$C_4$)-carbonylamino ou (alkyl en $C_1$-$C_4$)anilino et dont les chaînes alkyle peuvent être interrompues par des atomes d'oxygène, phényle, alcoxy en $C_1$-$C_{22}$, alkylthio en $C_1$-$C_{20}$, halogéno, nitro, cyano, mono ou di-(alkyl en $C_1$-$C_4$)amino, 1-azacycloalkyle, alkylsulfonyle en $C_1$-$C_4$, alcoxysulfonyle en $C_1$-$C_4$, phénylsulfonyle, (alkyl en $C_1$-$C_4$)phénylsulfonyle, hydroxysulfonyle, anilino, (alkyl en $C_1$-$C_4$)anilino, alcanoyle en $C_1$-$C_4$, alcanoylamino en $C_1$-$C_4$, (alcoxy en $C_1$-$C_4$)carbonyle, (alcoxy en $C_1$-$C_4$)carbonylamino, N-mono

ou N,N-di(alkyl en $C_1$-$C_4$)carbamoyle, sulfamoyle, N-mono ou N,N-di(alkyl en $C_1$-$C_4$)sulfamoyle, uréido; uréido substitué par un groupement alkyle en $C_1$-$C_4$; phénoxy, phénylthio ou le reste de formule

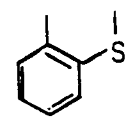

et/ou sont condensés à un noyau benzène.

**2.** Colorants d'acide naphtolactamequadratique selon la revendication 1, caractérisés en ce que $R^1$ et $R^2$ indépendamment l'un de l'autre représentent un groupement alkyle en $C_3$-$C_{22}$ éventuellement substitué par des radicaux phényle, halogéno, alcanoyle en $C_1$-$C_4$, carboxy, alcanoylamino en $C_1$-$C_4$, (alcoxy en $C_1$-$C_4$)carbonyle, (alcoxy en $C_1$-$C_4$)carbonylamino ou (alkyl en $C_1$-$C_4$)anilino et dont la chaîne alkyle peut éventuellement être interrompue par des atomes d'oxygène et les noyaux A, B, C et D sont éventuellement substitues par des groupements alkyle en $C_1$-$C_{22}$, phényle, alcoxy en $C_1$-$C_{22}$, alkylthio en $C_1$-$C_{20}$, halogéno, nitro, cyano, mono ou di(alkyl en $C_1$-$C_4$)amino, 1-azacycloalkyle, alkylsulfonyle en $C_1$-$C_4$, alcoxysulfonyle en $C_1$-$C_4$, phénylsulfonyle, (alkyl en $C_1$-$C_4$)phénylsulfonyle, hydroxysulfonyle, anilino, (alkyl en $C_1$-$C_4$)anilino, alcanoyle en $C_1$-$C_4$, alcanoylamino en $C_1$-$C_4$, (alcoxy en $C_1$-$C_4$)-carbonyle, (alcoxy en $C_1$-$C_4$)carbonylamino, carbamoyle, N-mono ou N,N-di(alkyl en $C_1$-$C_4$)carbamoyle, sulfamoyle, N-mono ou N,N-di(alkyl en $C_1$-$C_4$)sulfamoyle, uréido; uréido substitué par un groupement alkyle en $C_1$-$C_4$; phénoxy, phénylthio ou le reste

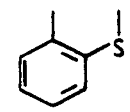

ou sont condensés avec un noyau benzène.

**3.** Colorants d'acide naphtolactamequadratique selon la revendication 1, caractérisés en ce que $R_1$ et $R_2$ représentent indépendamment l'un de l'autre un groupement alkyle en $C_6$-$C_{22}$, 2-méthoxyéthyle, 2,3,3-triméthyl-4-hydroxybutyle, 2-éthoxyéthyle, 2-n-butoxyéthyle, 2-benzyloxyéthyle, 2-hydroxyéthyle, 8-hydroxyoctyle, 3,6-dioxaheptyle, 3,6-dioxaoctyle, 3,6-dioxadécyle, 3,6-dioxa-7-phénylheptyle, 3,6-dioxahexyle, 3,6,9-trioxadécyle, 3,6,9-trioxa-undécyle, 3,6,9-trioxatridécyle, 3,6,9-trioxa-10-phényldécyle, 3,6,9-trioxa-10-hydroxydécyle, benzyle ou undéc-10-ényle-1, et l'un des noyaux A ou B et c ou D est non substitué et l'autre est substitué par un groupement alkyle en $C_1$-$C_{22}$, 1,3-dioxabutyle, 1,3-dioxapentyle, 1,3-dioxaheptyle, 1,3-dioxa-4-phénylbutyle, 1,3-dioxapropyle, 1,3,6-trioxaheptyle, 1,3,6-trioxaoctyle, 1,3,6-trioxadécyle, 1,3,6-trioxa-7-phénylheptyle, 1,3,6-trioxahexyle, 1,3,6,9-tétraoxadécyle, 1,3,6,9-tétraoxaundécyle, 1,3,6,9-tétraoxatridécyle, 1,3,6,9-tétraoxa-10-phényldécyle, 1,3,6,9-tétraoxa-10-hydroxydécyle, phényle, alcoxy en $C_1$-$C_{22}$, alkylthio en $C_1$-$C_{10}$, cyano, mono ou di(alkyl en $C_1$-$C_{16}$)-amino, 1-azacycloalkyle, chloro, bromo, hydroxysulfonyle, phénylthio ou le reste

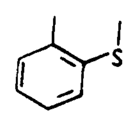

**4.** Colorants d'acide naphtolactamequadratique selon la revendication 1, caractérisés en ce que $R^1$ et $R^2$ sont mis pour des groupements alkyle en $C_{12}$-$C_{22}$, benzyle, undéc-10-ényle-1, 3,6-dioxahexyle, 3,6-dioxaheptyle, 3,6-dioxadécyle, 3,6-dioxa-7-phénylheptyle, 3,6,9-trioxadécyle, 3,6,9-trioxatridécyle ou 8-hydroxyoctyle et les noyaux A, a, C et D ne sont pas substitués.

**5.** Milieu d'enregistrement optique se composant d'un support et d'une couche de colorants sensibles à la

lumière laser ou d'une couche d'un polymère thermoplastique ou réticulé contenant un colorant, caractérisé en ce que le polymère contient au moins un colorant d'acide naphtolactamequadratique de formule (I)

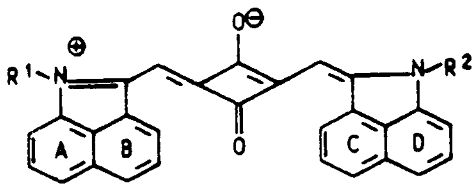

(I),

dans laquelle $R^1$ et $R^2$ indépendamment l'un de l'autre représentent un groupement alkyle en $C_3$-$C_{22}$ éventuellement substitué par des radicaux phényle, halogéno, alcanoyle en $C_1$-$C_4$, carboxy, alcanoylamino en $C_1$-$C_4$, (alcoxy en $C_1$-$C_4$)carbonyle, (alcoxy en $C_1$-$C_4$)carbonylamino ou (alkyl en $C_1$-$C_4$)anilino, où les chaînes alkyle peuvent être interrompues par des atomes d'oxygène, un groupement aralkyle en $C_1$-$C_4$, un groupement cycloalkyle en $C_5$-$C_7$ éventuellement substitué par des radicaux alkyle en $C_1$-$C_4$ ou halogéno ou un groupement phényle éventuellement substitué par des radicaux alkyle en $C_1$-$C_4$, alcoxy en $C_1$-$C_4$, halogéno ou di(alkyl en $C_1$-$C_4$)amino et
dans laquelle les noyaux A, B, C et D sont éventuellement substitués par des groupements alkyle en $C_1$-$C_{22}$, ceux-ci pouvant éventuellement être substitués par des radicaux phényle, halogéno, alcanoyle en $C_1$-$C_4$,carboxy, alcanoylamino en $C_1$-$C_4$, (alcoxy en $C_1$-$C_4$)carbonyle, (alcoxy en $C_1$-$C_4$)-carbonylamino ou (alkyl en $C_1$-$C_4$)anilino et dont les chaînes alkyle peuvent être interrompues par des atomes d'oxygène, phényle, alcoxy en $C_1$-$C_{22}$, alkylthio en $C_1$-$C_{20}$, halogéno, nitro, cyano, mono ou di-(alkyl en $C_1$-$C_4$)amino, 1-azacycloalkyle, alkylsulfonyle en $C_1$-$C_4$, alcoxysulfonyle en $C_1$-$C_4$, phénylsulfonyle, (alkyl en $C_1$-$C_4$)phénylsulfonyle, hydroxysulfonyle, anilino, (alkyl en $C_1$-$C_4$)anilino, alcanoyle en $C_1$-$C_4$, alcanoylamino en $C_1$-$C_4$, (alcoxy en $C_1$-$C_4$)carbonyle, (alcoxy en $C_1$-$C_4$)carbonylamino, N-mono ou N,N-di(alkyl en $C_1$-$C_4$)carbamoyle, sulfamoyle, N-mono ou N,N-di(alkyl en $C_1$-$C_4$)sulfamoyle, uréido; uréido substitué par un groupement alkyle en $C_1$-$C_4$; phénoxy, phénylthio ou le reste de formule

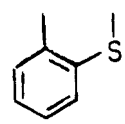

et/ou sont condensés à un noyau benzène.

**6.** Système d'enregistrement optique selon la revendication 5, caractérisé en ce que $R^1$ et $R^2$ indépendamment l'un de l'autre représentent un groupement alkyle en $C_3$-$C_{22}$ éventuellement substitué par des radicaux phényle, halogéno, alcanoyle en $C_1$-$C_4$, carboxy, alcanoylamino en $C_1$-$C_4$, (alcoxy en $C_1$-$C_4$)carbonyle, (alcoxy en $C_1$-$C_4$)carbonylamino ou (alkyl en $C_1$-$C_4$)anilino et dont la chaîne alkyle peut éventuellement être interrompue par des atomes d'oxygène et les noyaux A, B, C et D sont éventuellement substitués par des groupements alkyle en $C_1$-$C_{22}$, phényle, alcoxy en $C_1$-$C_{22}$, alkylthio en $C_1$-$C_{20}$, halogéno, nitro, cyano, mono ou di(alkyl en $C_1$-$C_4$)amino, 1-azacycloalkyle, alkylsulfonyle en $C_1$-$C_4$, alcoxysulfonyle en $C_1$-$C_4$, phénylsulfonyle, (alkyl en $C_1$-$C_4$)phénylsulfonyle, hydroxysulfonyle, anilino, (alkyl en $C_1$-$C_4$)anilino, alcanoyle en $C_1$-$C_4$, alcanoylamino en $C_1$-$C_4$, (alcoxy en $C_1$-$C_4$)-carbonyle, (alcoxy en $C_1$-$C_4$)carbonylamino, carbamoyle, N-mono ou N,N-di(alkyl en $C_1$-$C_4$)carbamoyle, sulfamoyle, N-mono ou N,N-di(alkyl en $C_1$-$C_4$)sulfamoyle, uréido; uréido substitué par un groupement alkyle en $C_1$-$C_4$; phénoxy, phénylthio ou le reste

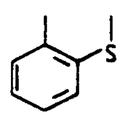

ou sont condensés avec un noyeau benzène.

7. Milieu d'enregistrement optique selon la revendication 5, caractérisé en ce que $R_1$ et $R_2$ représentent indépendamment l'un de l'autre un groupement alkyle en $C_6$-$C_{22}$, 2-méthoxyéthyle, 2,3,3-triméthyl-4-hydroxybutyle, 2-éthoxyéthyle, 2-n-butoxyéthyle, 2-benzyloxyéthyle, 2-hydroxyéthyle, 8-hydroxyoctyle, 3,6-dioxaheptyle, 3,6-dioxaoctyle, 3,6-dioxadécyle, 3,6-dioxa-7-phénylheptyle, 3,6-dioxahexyle, 3,6,9-trioxadécyle, 3,6,9-trioxa-undécyle, 3,6,9-trioxatridécyle, 3,6,9-trioxa-10-phényldécyle, 3,6,9-trioxa-10-hydroxydécyle, benzyle ou undéc-10-ényle-1, et l'un des noyaux A ou B et C ou D est non substitué et l'autre est substitué par un groupement alkyle en $C_1$-$C_{22}$, 1,3-dioxabutyle, 1,3-dioxapentyle, 1,3-dioxaheptyle, 1,3-dioxa-4-phénylbutyle, 1,3-dioxapropyle, 1,3,6-trioxaheptyle, 1,3,6-trioxaoctyle, 1,3,6-trioxadécyle, 1,3,6-trioxa-7-phénylheptyle, 1,3,6-trioxahexyle, 1,3,6,9-tétraoxadécyle, 1,3,6,9-tétraoxaundécyle, 1,3,6,9-tétraoxatridécyle, 1,3,6,9-tétraoxa10-phényldécyle, 1,3,6,9-tétraoxa-10-hydroxydécyle, phényle, alcoxy en $C_1$-$C_{22}$, alkylthio en $C_1$-$C_{10}$, cyano, mono ou di(alkyl en $C_1$-$C_{16}$)amino, 1-azacycloalkyle, chloro, bromo, hydroxysulfonyle, phénylthio ou le reste

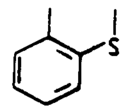

8. Milieu d'enregistrement optique selon la revendication 5, caractérisé en ce que $R^1$ et $R^2$ sont mis pour des groupements alkyle en $C_{12}$-$C_{22}$, benzyle, undéc-10-ényle-1, 3,6-dioxahexyle, 3,6-dioxaheptyle, 3,6-dioxadécyle, 3,6-dioxa-7-phénylheptyle, 3,6,9-trioxadécyle, 3,6,9-trioxatridécyle ou 8-hydroxyoctyle et les noyaux A, B, C et D ne sont pas substitués.